Europäisches Patentamt

European Patent Office

Office européen des brevets

(11) Publication number: **0 249 299**
**A2**

## (12) EUROPEAN PATENT APPLICATION

(21) Application number: **87201093.9**

(51) Int. Cl.⁴: **B29C 67/22** , F25D 23/02

(22) Date of filing: **10.06.87**

(30) Priority: **13.06.86 IT 2079286**

(43) Date of publication of application:
**16.12.87 Bulletin 87/51**

(84) Designated Contracting States:
**DE ES FR GB SE**

(71) Applicant: **I.R.E. Industrie Riunite Eurodomestici S.p.A.**

**I-21024 Cassinetta di Biandronno (Varese)(IT)**

(84) **ES**

(71) Applicant: **N.V. Philips' Gloeilampenfabrieken Groenewoudseweg 1 NL-5621 BA Eindhoven(NL)**

(84) **DE FR GB SE**

(72) Inventor: **Piva, Giuliano**
**c/o INT. OCTROOIBUREAU B.V. Prof. Holstlaan 6**
**NL-5656 AA Eindhoven(NL)**
Inventor: **Radice, Romano**
**c/o INT. OCTROOIBUREAU B.V. Prof. Holstlaan 6**
**NL-5656 AA Eindhoven(NL)**

(74) Representative: **Bos, Kornelis Sjoerd et al**
**INTERNATIONAAL OCTROOIBUREAU B.V.**
**Prof. Holstlaan 6**
**NL-5656 AA Eindhoven(NL)**

(54) **Method and apparatus for producing insulated doors for refrigerators, particularly domestic refrigerators, and the door obtained.**

(57) A method and apparatus whereby a reactive polyurethane mixture (24) is fed into the upwardly open door backing panel (1) while this rests on a profiled mould support (10), to form a soft or elastically yieldable expanded polyurethane mass. The outer metal wall (2) of the door is then superposed on the door backing panel (1) without removing the door backing panel from the mould. The assembly formed from the outer metal wall (2) and door backing panel (1) defines an empty compartment (30) into which a reactive polyurethane mixture is injected to produce a non-elastically yieldable expanded polyurethane mass which forms the thermal insulation. This injection takes place while said assembly is disposed together with the mould (10) between two counteracting surfaces (11, 17).

*Fig. 4*

## Method and apparatus for producing insulated doors for refrigerators, particularly domestic refrigerators, and the door obtained.

The invention relates to a method and apparatus for producing doors for refrigerators, in particular domestic refrigerators, the doors comprising: a door backing panel shaped with cavities and obtained from a sheet of plastices material by conventional vacuum-forming; an outer metal wall open towards the door backing panel and obtained by conventional methods; and a thermoinsulating mass of expanded polyurethane between the outer wall and door backing panel.

In a known method for producing this type of door, the outer metal wall, closed on the open side by a sheet of for example papery material, is mounted in a mould formed from more than one part and surrounding the entire assembly. A reactive polyurethane mixture is injected into the compartment between the sheet and outer wall to form the insulating expanded polyurethane mass. After the insulated outer wall has been extracted from the mould, the door backing panel and seal gasket are joined to it by screws. This known method, besides requiring costly and heavy moulds to receive the metal part with the sheet during the formation of the polyurethane insulation in the compartment defined between them, also has certain drawbacks, namely the need to use and apply a sheet of material for closing the open side of the outer metal wall, and for using screws for fixing the door backing panel to this latter. Moreover, the shaped portions or ribs present in the door backing panel are empty and therefore have relatively poor mechanical strength and a resultant short life.

In another method, the outer metal wall and door backing panel are disposed in a mould (with mobile parts) which encloses it completely, and the reactive mixture from which the expanded polyurethane insulation is formed is injected into the interspace between the two components. This known method requires the use of relatively complicated moulds which are heavy and thus difficult and slow to handle, thus negatively affecting plant productivity. In addition, that part of the mould which receives the door backing panel has to be constructed with considerable accuracy in order to support the door backing panel at all points during the formation of the polyurethane insulation so as to, prevent the pressures which arise during this stage causing unacceptable deformation of the door backing panel itself which, it should be noted, is of relatively thin plastics material and thus easily deformable. Finally, in this known method the polyurethane insulation, which is substantially rigid, also occupies the ribs and shelves of the door backing panel to produce a rigidity which in certain cases does not allow side walls, containers or similar accessories to be easily mounted on them.

The most important negative aspect of these known methods is the complexity and weight of the moulds which, as stated, comprise a number of parts which surround the door components on all sides. For example, in the case of the second described method these moulds comprise two parts, namely a lower part provided with a lateral retaining wall and matching the shape of the door backing panel and preferably part of the lateral contour of the outer metal wall, and an upper part which matches this latter and has its lateral retaining wall abutting against that of the lower part. Mould fixing devices must also be provided for centering the moulds in the required position for injecting the polyurethane mixture, said mould fixing devices involving costly precision work during their fitting to the plates between which the mould itself has to be mounted.

The main object of the present invention is to provide a method and apparatus which enable insulated refrigerator doors formed from an outer metal wall and a vacuum-formed door backing panel to be produced in a more simple, flexible and economical manner, which does not depend on the use of heavy and complicated costly moulds as required by current methods.

According to the invention, the method comprises placing the door backing panel on a support; feeding a reactive polyurethane mixture into cavities of the door backing panel so as to form therein a relatively soft mass of expanded polyurethane; superposing the outer metal wall on the door backing panel while disposed on the support so as to form a compartment, and feeding a reactive polyurethane mixture into said compartment so as to form therein the thermal insulation, which rigidly joins together the outer metal wall and door backing panel, while the assembly consisting of the support, door backing panel and outer metal wall is disposed between two counteracting surfaces.

The apparatus for implementing the method comprises the use of a support having a shape which at least partly corresponds to the door backing panel, but without lateral retaining walls for it. The invention therefore dispenses with the conventional mould formed from at least two mating parts defining the chamber containing the door backing panel and outer metal wall and replaces it with a simple support for the door backing panel, and causes the reaction for forming the expanded polyurethane insulation to take place between two counteracting surfaces conceptually equivalent to the plates of a press, one applied directly to the major face of the outer metal wall and the other applied to the support.

The invention will be more apparent from the detailed description of a preferred embodiment thereof given hereinafter by way of non-limiting example with reference to the accompanying drawing, in which:

Figure 1 is a diagrammatic cross-section through a door according to the invention:

Figure 1A is a sectional view to an enlarged scale of a detail of the door of Figure 1;

Figure 2 is a diagrammatic side view of the apparatus or plant according to the invention;

Figure 3 is a diagrammatic cross-section to an enlarged scale on the line III-III of Figure 2;

Figure 4 is a diagrammatic cross-section to an enlarged scale on the line IV-IV of Figure 2;

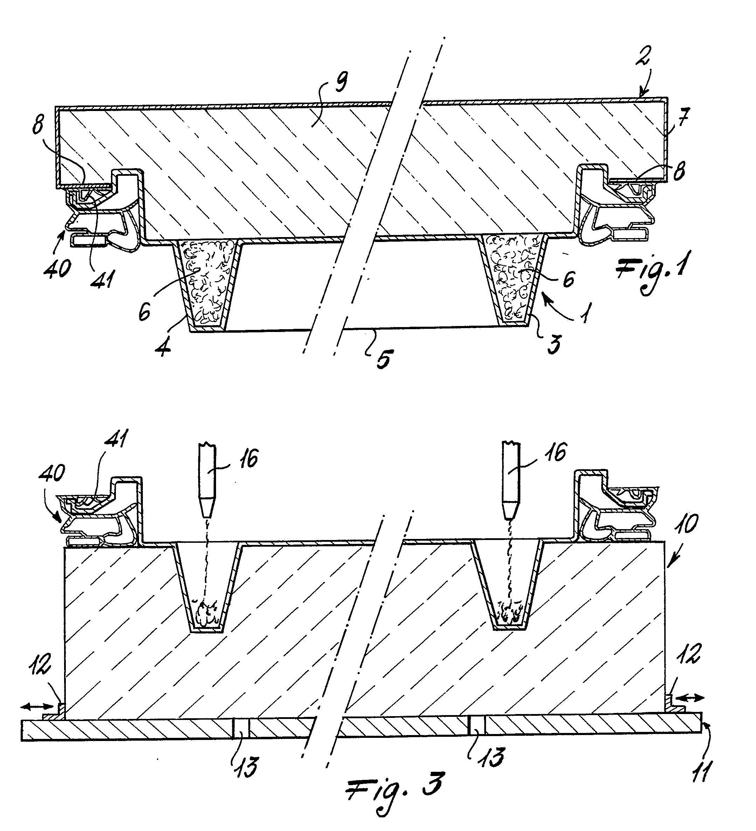

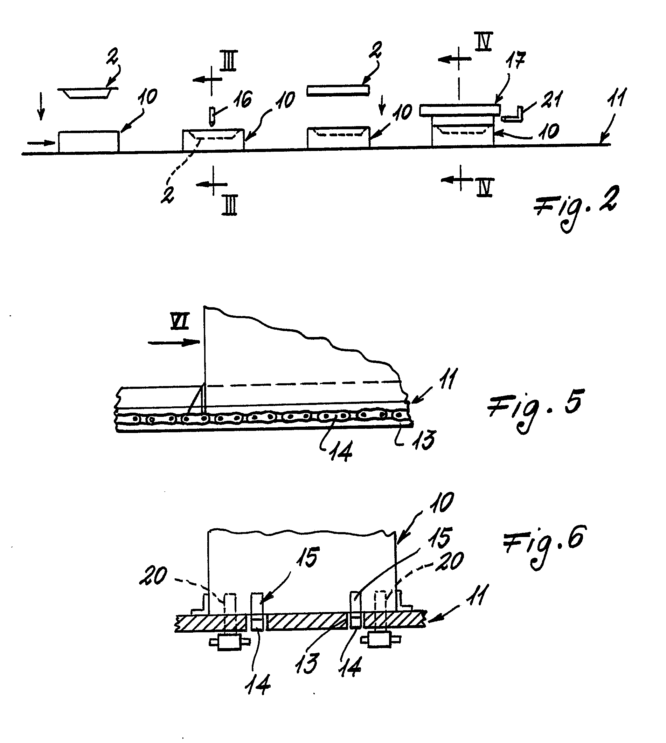

Figure 5 is a diagrammatic, partial side elevation of an illustrative detail of the means for advancing the mould; and Figure 6 is a view in accordance with the arrow VI of Figure 5. In Figures 1 and 1A which show cross-sections through the door, the reference numeral 1 indicates a conventional door backing panel obtained by vacuum-forming a sheet of plastics material, for example impact-resistant polystyrene or acrylonitrile-butadiene-styrene (ABS). The door backing panel comprises a pair of hollow longitudinal parallel ribs 3, 4 possibly interconnected by hollow shelves 5. In the cavities defined by the ribs and shelves, there is present a mass of relatively soft expanded material 6, for example open-cell polyurethane.

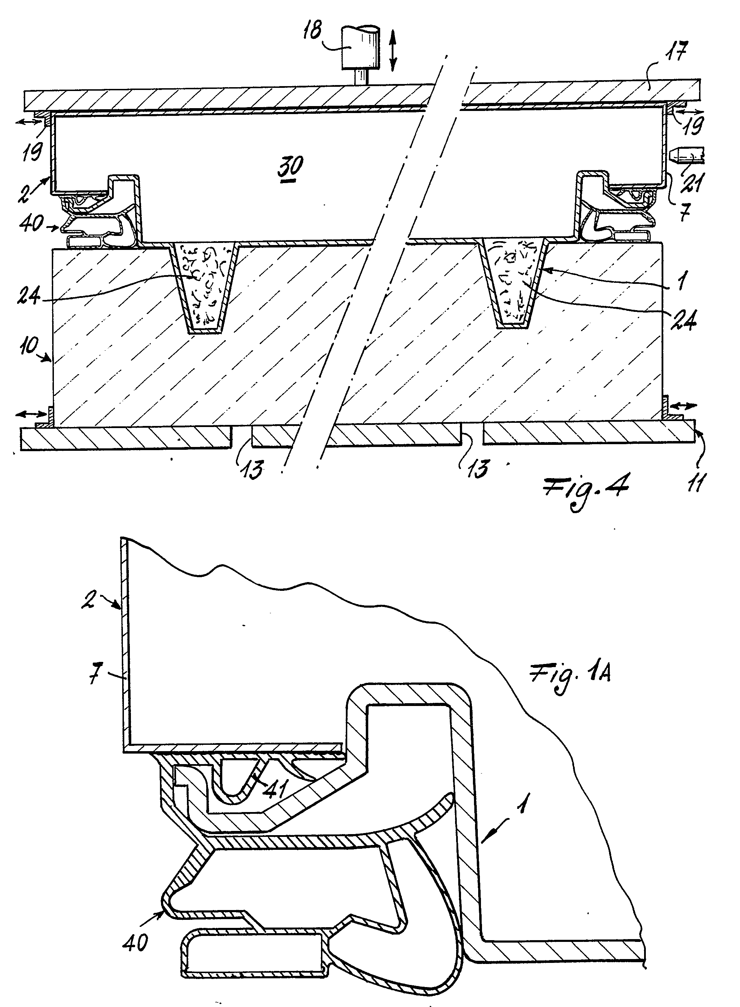

The door also comprises an outer sheet metal wall 2 comprising a perimetral side portion 7 which is bent inwards at its end, at 8. The perimeter of the door backing panel 1 adheres against the flanged end 8 by way of a conventional gasket 40 clamped at its appendix or foot 41 between the door backing panel and the outer wall 2. In the compartment defined by the outer wall 2 and door backing panel 1 there is present a mass 9 of non-elastic closed-cell expanded polyurethane of the type conventionally used for producing the thermal insulation of domestic refrigerators. This mass also rigidly joins together the component parts of the door. The described door can be formed with the apparatus shown in Figure 2.

In a station of this apparatus the door backing panel 1 (on the periphery of which the gasket 40 has been previously mounted) is rested in a support 10 shaped in such a manner as to match its lower profile, as can be seen in Figure 2. The mould is relatively light, easy to produce and constructed for example of polyester or rigid polyurethane filled with glass fibre and/or hollow glass microspheres. The mould is rested on a surface 11 along which it can move, and is laterally guided by guides 12 which can be moved in any known manner transversely, as indicated by the arrows, to adapt to moulds of different width.

In the surface 11 there are provided two parallel slots 13 along which drive chains 14 (see Fig. 5, 6) extend, driven by known motor means. Drive teeth 15 are fixed to the chain so that they emerge from the slots 13, and act against the rear end of the support 10 so as to move it along its working path.

At the various plant stations, apertures are provided in the surface 11 from which lowerable stops 20 emerge, against which the moulds are halted for the required time, with stoppage of the chain movement.

After the door backing panel 2 (with its gasket 40) has been rested on the support 10, this latter reaches a station in which a reactive polyurethane mixture is injected into the cavities of the ribs 3, 4 and shelves 5 by nozzles 16 (see Figure 3), to generate in-situ a relatively soft expanded mass 24 preferably of open-cell type which fills these cavities. The polyurethane mixture reaction takes place with the door backing panel upwardly open.

The support 10 then passes to another station in which the outer metal wall 2 of the door is rested on it.

After this, the mould reaches a station (see also Figure 4) in which a restraining plate 17 driven vertically for example by a double-acting cylinder-piston unit 18 and provided with stops 19 mobile in the direction of the arrows is applied to the outer wall 2. The assembly formed by the support 10, door backing panel 1 and outer metal wall 2 is opposed by the plate 17 and by the surface 11, these latter being therefore equivalent to the plates of a press. A reactive polyurethane mixture is then injected into the compartment 30 between the door backing panel and outer wall through nozzles 21 and holes, not shown, provided in the side 7 of the outer wall 2, to form in-situ a substantially rigid closed-cell expanded mass which forms the thermal insulation 9 of the door and simultaneously rigidly joins together the door backing panel and outer metal wall 2.

The production cycle terminates by closing the injection holes provided in the outer wall 2 and extracting the finished door from the mould 10.

The invention thus avoids the use of relatively complicated, costly and heavy moulds, thus obviating their handling problems, and replaces them with light, easily handled low-cost supports.

## Claims

1. A method for producing doors for refrigerators, in particular domestic refrigerators, the doors comprising a door backing panel shaped with cavities and obtained from a sheet of plastics material by conventional vacuum-forming, an outer metal wall open towards the door backing panel, and thermal insulation of expanded polyurethane, characterised by comprising:
placing the door backing panel on a support;
feeding a reactive polyurethane mixture into cavities of the door backing panel so as to form therein a relatively soft mass of expanded polyurethane;
superposing the outer metal wall on the door backing panel while disposed on the support so as to form a compartment, and feeding a reactive polyurethane mixture into said compartment so as to form therein the thermal insulation, which rigidly joins together the outer metal wall and door backing panel, while the assembly consisting of the door backing panel, outer metal wall and support is disposed between two counteracting surfaces.

2. An apparatus for implementing the method claimed in Claim 1, characterised by the use of a support at least partly corresponding to the door backing panel, but without lateral retaining walls for it.

3. An apparatus as claimed in Claim 2, characterized by comprising means for moving the mould, means for feeding a quantity of reactive polyurethane mixture into the cavities of the upwardly open door backing panel, counteracting means to be superposed on the outer metal wall while resting on the door backing panel located on the support, and means for feeding between the door backing panel and outer wall a quantity of a reactive polyurethane mixture which is different from the preceding.

Fig. 1

Fig. 3

0 249 299

Fig. 4

Fig. 1A

2-Ⅲ-PHI 86-005

Fig. 2

Fig. 5

Fig. 6